# EUROPEAN PATENT APPLICATION

(11) **EP 4 119 266 A1**
(43) Date of publication of application: **18.01.2023**
(21) Application number: 22183734.7
(22) Date of filing: 08.07.2022
(51) Int. Cl.: B22F 10/14, B22F 12/50, B29C 64/209, B22F 12/53, B22F 12/52

(54) **POWDER SUPPLY APPARATUS AND THREE-DIMENSIONAL OBJECT MODELING APPARATUS**

(30) Priority: 13.07.2021 JP 2021115917
(71) Applicant: Ricoh Company, Ltd., Tokyo 143-8555 (JP)
(72) Inventor: OSANAI, Yohei, Tokyo, 143-8555 (JP); KAI, Tomoki, Tokyo, 143-8555 (JP); TANAKA, Kohichiroh, Tokyo, 143-8555 (JP); OGASAWARA, Yamato, Yamanashi, 401-0201 (JP); WATANABE, Yuuichi, Yamanashi, 401-0201 (JP)
(74) Representative: SSM Sandmair

(57) **Abstract**

A powder supply apparatus comprising: at least a vibration sieve part configured to vibrate a powder supply port by a vibration source, wherein the powder supply port has a rectangular shape, and the vibration source is mounted on a short side of the powder supply port.

## Description

### BACKGROUND OF THE INVENTION

### 1. Field of the Invention

The present invention relates to a powder supply apparatus and a three-dimensional object modeling apparatus.

### 2. Description of the Related Art

Conventionally, in a three-dimensional (3D) printer (one example of a three-dimensional object modeling apparatus) that includes a powder head, a powder supply apparatus that supplies powder while moving a hopper that is a powder holding unit on a powder layer is known as one example of a technology for supplying powder to a powder layer in a modeling tank.

Japanese Unexamined Patent Application Publication No. 2015-15921 discloses, for the purpose of controlling powder supply, a technology for controlling powder supply by controlling ON and OFF of vibration of a vibration sieve.

However, in the conventional powder supply apparatus, there is a problem in that it is difficult to uniformly supply powder from the powder holding unit to the modeling tank.

The present invention has been conceived in view of the foregoing situation, and an object of the present invention is to uniformly supply powder to the modeling tank when supplying powder from the powder holding unit to the modeling tank by using the vibration sieve.

### SUMMARY OF THE INVENTION

According to an aspect of the present invention, a powder supply apparatus includes at least a vibration sieve part configured to vibrate a powder supply port by a vibration source. The powder supply port has a rectangular shape. The vibration source is mounted on a short side of the powder supply port.

According to an aspect of the present invention, it is possible to uniformly supply the powder to the modeling tank when the powder is supplied from the powder holding unit to the modeling tank by the vibration sieve.

### BRIEF DESCRIPTION OF THE DRAWINGS

FIG. 1 is a diagram illustrating an example of a schematic configuration of a three-dimensional object modeling apparatus according to an embodiment;
FIG. 2A is a diagram for explaining an example of a flow of a modeling process for a modeled object by the three-dimensional object modeling apparatus;
FIG. 2B is a diagram for explaining the example of the flow of the modeling process for the modeled object by the three-dimensional object modeling apparatus;
FIG. 2C is a diagram for explaining the example of the flow of the modeling process for the modeled object by the three-dimensional object modeling apparatus;
FIG. 2D is a diagram for explaining the example of the flow of the modeling process for the modeled object by the three-dimensional object modeling apparatus;
FIG. 2E is a diagram for explaining the example of the flow of the modeling process for the modeled object by the three-dimensional object modeling apparatus;
FIG. 2F is a diagram for explaining the example of the flow of the modeling process for the modeled object by the three-dimensional object modeling apparatus;
FIG. 2G is a diagram for explaining the example of the flow of the modeling process for the modeled object by the three-dimensional object modeling apparatus;
FIG. 2H is a diagram for explaining the example of the flow of the modeling process for the modeled object by the three-dimensional object modeling apparatus;
FIG. 3A is a diagram for explaining an example of powder used in modeling performed by the three-dimensional object modeling apparatus;
FIG. 3B is a diagram for explaining the example of the powder used in the modeling performed by the three-dimensional object modeling apparatus;
FIG. 3C is a diagram for explaining the example of the powder used in the modeling performed by the three-dimensional object modeling apparatus;
FIG. 4 is a diagram illustrating an example of a powder supply apparatus included in the three-dimensional object modeling apparatus according to the embodiment;
FIG. 5 is a diagram illustrating a relationship between a modeling tank and a powder supply port;
FIG. 6 is a diagram illustrating a relationship between a conventional powder supply port and a vibration source;
FIG. 7A is a diagram illustrating an example of a vibration sieve unit;
FIG. 7B is a diagram illustrating an exemplary cross section of the vibration sieve unit taken along a line A-A;
FIG. 7C is a diagram illustrating an exemplary cross section of the vibration sieve unit taken along a line B-B; and
FIG. 7D is a diagram illustrating a relationship between a holding frame and a vibration source.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

Embodiments of a powder supply apparatus and a three-dimensional object modeling apparatus will be described in detail below with reference to the accompanying drawings.

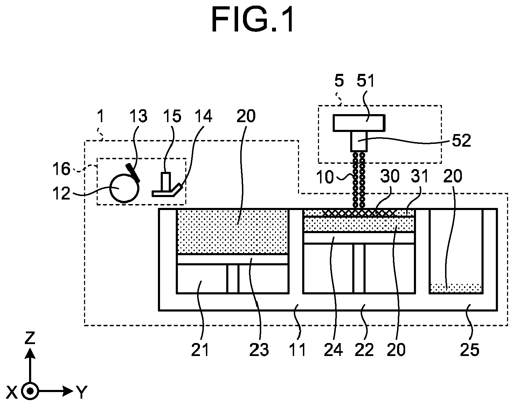

FIG. 1 is a diagram illustrating an example of a schematic configuration of a three-dimensional object modeling apparatus according to an embodiment. First, an example of the schematic configuration of the three-dimensional object modeling apparatus will be described below with reference to FIG. 1.

The three-dimensional object modeling apparatus includes a modeling part 1 and a modeling unit 5. The modeling part 1 forms a modeling layer 30 that is a layered modeled object in which powder (powder particle) 20 is bound. The modeling unit 5 models a three-dimensional modeled object by applying a modeling liquid 10 to a powder layer 31 that is laid in a layered manner in the modeling part 1.

The modeling part 1 includes a powder tank 11 and a laminating unit 16. The laminating unit 16 includes a flattening roller 12 that serves as a rotator as a flattening means (recoater), a powder removal plate 13, a vibration blade 14 that is a tapping means for the powder 20 and that vibrates in a Z (vertical or up-down) direction, and an actuator 15 for the vibration blade 14. As the flattening means, a plate member (blade or bar) may be used instead of the rotator, such as the flattening roller 12, for example. As the actuator 15 for the vibration blade 14, an air vibrator, an eccentric motor, a multilayer piezoelectric element, or the like may be used. Here, explanation will be given based on the assumption that the powder 20 is tapped by using the vibration blade 14, but if density of the powder layer 31 is originally high, it is not always needed to use the vibration blade 14.

The powder tank 11 includes a supply tank 21, a modeling tank 22, and an excessive powder receiving tank 25. The supply tank 21 is a tank for supplying the powder 20 to the modeling tank 22. In the modeling tank 22, the modeling layer 30 is laminated and a three-dimensional modeled object is modeled.

The excessive powder receiving tank 25 accumulates the excessive powder 20 that falls down among the powder 20 that is supplied by the flattening roller 12 when the new powder layer 31 is formed. A bottom portion of the supply tank 21 is arranged as a supply stage 23 so as to be able to freely move up and down in a vertical direction (Z direction). Similarly, in a bottom portion of the modeling tank 22, the three-dimensional modeled object that is formed by laminating the modeling layer 30 is modeled on a modeling stage 24. A bottom surface of the excessive powder receiving tank 25 is configured such that a mechanism that sucks the powder 20 is arranged, or such that the excessive powder receiving tank 25 is easily removed.

The supply stage 23 and the modeling stage 24 are moved up and down in the Z direction (height direction) by, for example, a motor. The flattening roller 12 supplies the powder 20, which has been supplied on the supply stage 23 of the supply tank 21, to the modeling tank 22, flattens the powder 20 by the flattening roller 12 that is a flattening member, and forms the powder layer 31.

The flattening roller 12 is arranged so as to be able to move in a reciprocating manner in a Y direction along a stage surface (surface on which the powder 20 is carried) of the modeling stage 24, relative to the stage surface. Further, the flattening roller 12 is driven to rotate by a motor.

The modeling unit 5 includes a carriage 51 and a liquid application head (hereinafter, simply referred to as a head) 52 that applies the modeling liquid 10 to the powder layer 31 on the modeling stage 24. At least the single head 52 is mounted on the carriage 51. The carriage 51 is able to move in a reciprocating manner in an X (main-scanning) direction, the Y (sub-scanning) direction, and the Z direction by a motor, a guide member, and the like.

The head 52 is, for example, an inkjet head, and a nozzle array in which a plurality of nozzles for applying a liquid is arranged on the head 52. The nozzle array of the head 52 applies the modeling liquid 10. The configuration of the head is not limited to this example, and it may be possible to prepare four heads and cause the four heads to apply a cyan modeling liquid, a magenta modeling liquid, a yellow the modeling liquid, and a black modeling liquid to generate a color modeled object. As a liquid application system, an ink-jet system is frequently used, but it may be possible to use a dispenser system or the like.

The modeling part 1 will be described in detail below.

The powder tank 11 has a box shape, and includes three tanks, that is, the supply tank 21, the modeling tank 22, and the excessive powder receiving tank 25, each having an opened top surface. The supply stage 23 is arranged so as to be able to move up and down in the supply tank 21. Further, the modeling stage 24 is arranged so as to be able to move up and down in the modeling tank 22.

Side surfaces of the supply stage 23 are arranged so as to be in contact with inner surfaces of the supply tank 21. Side surfaces of the modeling stage 24 are arranged so as to be in contact with inner surfaces of the modeling tank 22. Top surfaces of the supply stage 23 and the modeling stage 24 are maintained horizontally.

The excessive powder receiving tank 25 is arranged adjacent to the modeling tank 22. The excessive powder 20 among the powder 20 that is supplied by the flattening roller 12 falls down to the excessive powder receiving tank 25 when the powder layer 31 is formed. The excessive powder 20 that has fallen down to the excessive powder receiving tank 25 is returned to a powder supply apparatus that supplies the powder 20 to the supply tank 21. The powder supply apparatus is arranged above the supply tank 21, and supplies the powder 20 that is accumulated in a tank or the like in the powder supply apparatus to the supply tank 21 when initial operation for modeling is performed or when an amount of powder in the supply tank 21 is reduced. As a powder conveying method for supplying the powder 20, a screw conveyor method using a screw, an air transfer method using air, or the like may be used.

The flattening roller 12 transfers and supplies the powder 20 from the supply tank 21 to the modeling tank 22, and flattens a surface by leveling the surface, so that the powder layer 31 that is layered powder with a predetermined thickness is formed. The flattening roller 12 is a bar-shaped member with a larger length than an inner size of each of the modeling tank 22 and the supply tank 21 (in other words, a width of a portion in which the powder 20 is supplied or packed), and is moved in a reciprocating manner in the Y direction along the stage surfaces by a reciprocating moving mechanism.

Further, the flattening roller 12 moves horizontally while being rotated by a motor so as to pass by above the supply tank 21 and the modeling tank 22 from an outer side of the supply tank 21. Accordingly, the powder 20 is transferred and supplied to an upper side of the modeling tank 22, and the flattening roller 12 flattens the powder 20 while passing by above the modeling tank 22, so that the powder layer 31 is formed.

On the laminating unit 16, the powder removal plate 13 that is a powder removal member for removing the powder 20 adhering to the flattening roller 12 is arranged so as to be in contact with a peripheral surface of the flattening roller 12. The powder removal plate 13 moves together with the flattening roller 12 while coming into contact with the peripheral surface of the flattening roller 12. Further, the powder removal plate 13 may be arranged in any of a forward direction and a counter direction when the flattening roller 12 rotates in a rotation direction to perform flattening.

In the present embodiment, the powder tank 11 of the modeling part 1 includes two tanks, that is, the supply tank 21 and the modeling tank 22, but the powder tank 11 may include only the modeling tank 22 such that the powder is supplied from the powder supply apparatus to the modeling tank 22 and the powder is flattened by the flattening means.

A control unit of the three-dimensional object modeling apparatus (three-dimensional modeling device) includes a central processing unit (CPU), a read only memory (ROM) for storing a program that implements control of three-dimensional object modeling operation and other fixed data, a random access memory (RAM) for temporarily storing modeling data or the like, and the like, and receives modeling data from a modeling data generation apparatus, such as an external personal computer. The modeling data generation apparatus generates modeling data in which a modeled object in a final form is sliced into the modeling layers 30. The control unit performs modeling operation for each of the modeling layers 30.

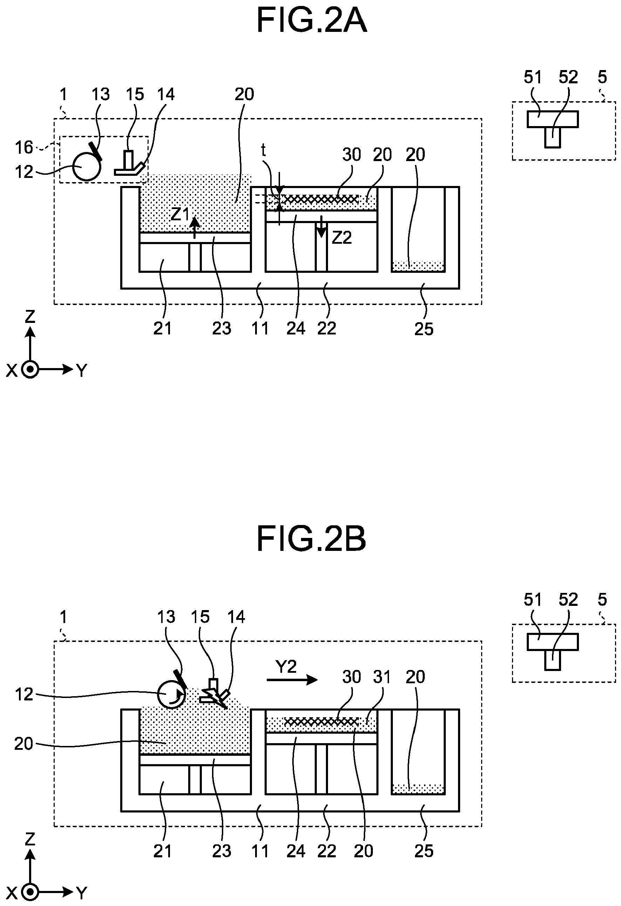

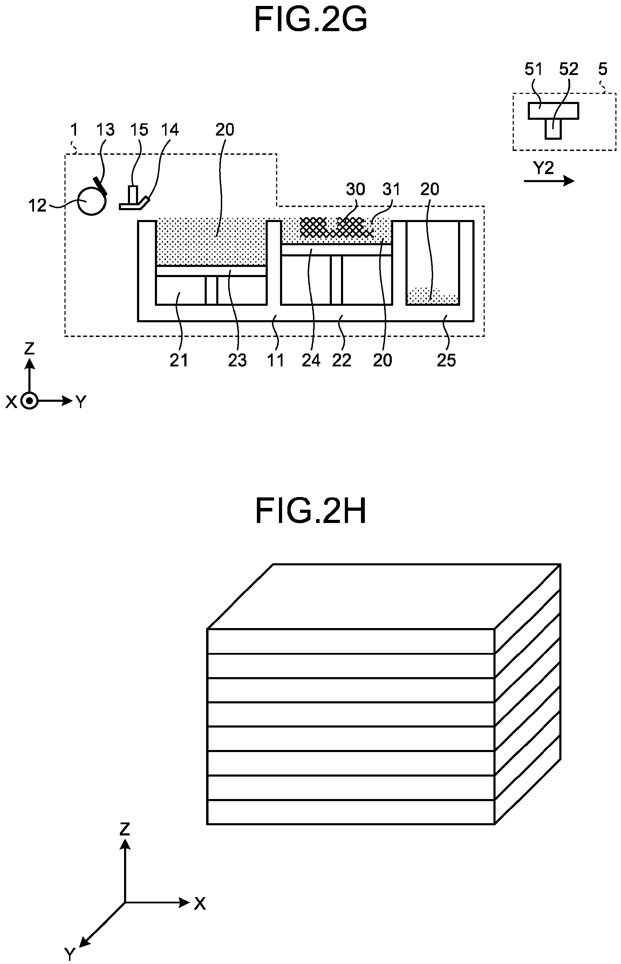

FIG. 2A to FIG. 2G are diagrams for explaining an example of a flow of a modeling process for a modeled object by the three-dimensional object modeling apparatus. FIG. 2H is a schematic diagram illustrating an example of a three-dimensional modeled object that is modeled by the three-dimensional object modeling apparatus. An example of the flow of the modeling process for a modeled object by the three-dimensional object modeling apparatus will be described below with reference to FIG. 2A to FIG. 2H.

Here, explanation will be given from a state in which the first modeling layer 30 is formed on the modeling stage 24 of the modeling tank 22. When the second modeling layer 30 is to be formed on the first modeling layer 30, as illustrated in FIG. 2A, the modeling unit 5 is located at an initial position that is moved away from the modeling part 1 in the Y direction. Subsequently, the three-dimensional object modeling apparatus operates the modeling part 1 to move the supply stage 23 of the supply tank 21 upward in a Z1 direction and move the modeling stage 24 of the modeling tank 22 downward in a Z2 direction.

At this time, the three-dimensional object modeling apparatus sets a downward movement distance of the modeling stage 24 such that an interval between a top surface (powder layer surface) of the modeling tank 22 and a lower portion (lower tangent portion) of the flattening roller 12 becomes equal to a predetermined value. The interval between the top surface of the modeling tank 22 and the lower portion of the flattening roller 12 corresponds to a thickness (t) of the powder layer 31 that is to be formed next. It is preferable to set the interval to about a few dozen to 100 micrometers (µm).

Subsequently, as illustrated in FIG. 2B, the three-dimensional object modeling apparatus transfers and supplies the powder 20 located above the level of the top surface of the supply tank 21 to the modeling tank 22 by moving the flattening roller 12 in a Y2 direction (to the side of the modeling tank 22) while rotating the flattening roller 12 in the forward direction (a direction of arrow) (powder supply). At this time, the three-dimensional object modeling apparatus causes the vibration blade 14 to vibrate.

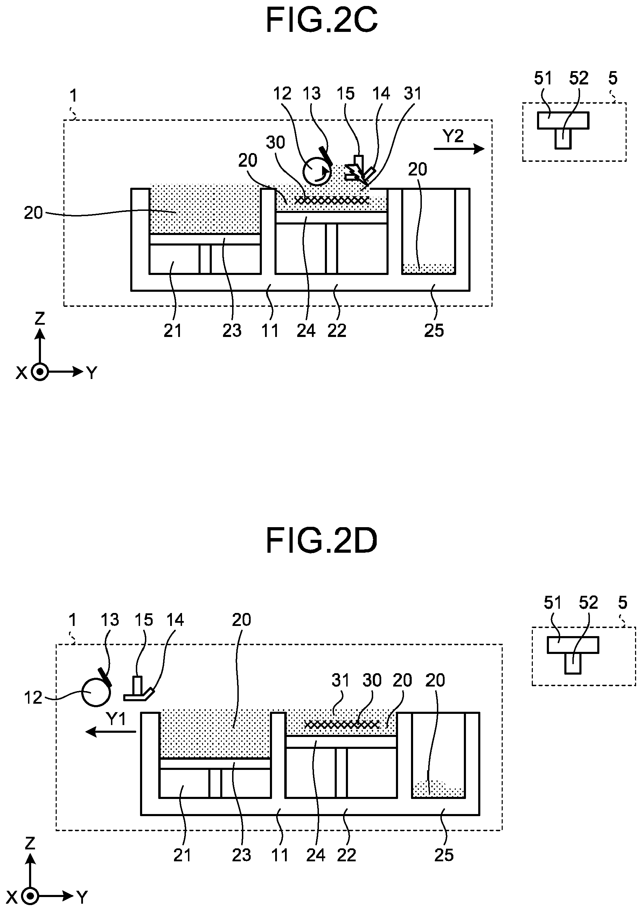

Furthermore, as illustrated in FIG. 2C, the three-dimensional object modeling apparatus moves the flattening roller 12 parallel to the stage surface of the modeling stage 24 of the modeling tank 22. Even when moving the flattening roller 12 parallel to the stage surface of the modeling stage 24 of the modeling tank 22, the three-dimensional object modeling apparatus moves the flattening roller 12 while causing the vibration blade to vibrate. Then, the three-dimensional object modeling apparatus stops vibration of the vibration blade 14 when the flattening roller 12 is fully moved above the modeling tank 22.

Here, the flattening roller 12 is able to move while maintaining a constant distance with the top surfaces of the modeling tank 22 and the supply tank 21. Because the flattening roller 12 is able to move while maintaining the constant distance with the top surfaces of the modeling tank 22 and the supply tank 21, it is possible to cause the flattening roller 12 to convey the powder 20 to above the modeling tank 22 and form the powder layer 31 with a uniform thickness on the modeling tank 22 or the already-formed modeling layer 30 as illustrated in FIG. 2D. By causing the vibration blade 14 to vibrate, the powder 20 is tapped and highly concentrated, and thereafter, the flattening roller 12 scrapes off the excessive powder 20, so that it is possible to form the highly-concentrated and flat powder layer 31. After forming the powder layer 31, the flattening roller 12 is moved in a Y1 direction and returned to the initial position as illustrated in FIG. 2D.

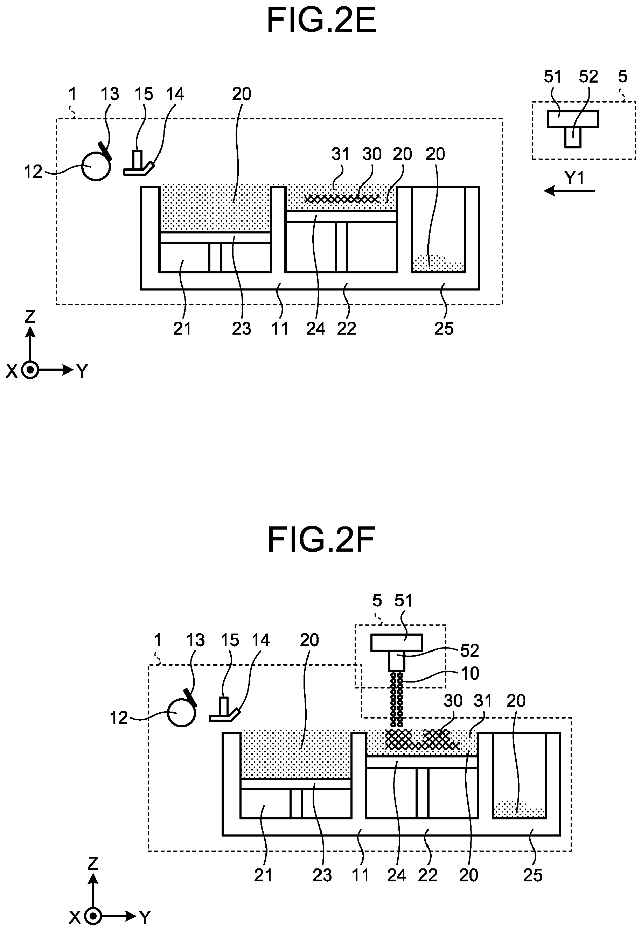

Subsequently, as illustrated in FIG. 2E, the three-dimensional object modeling apparatus moves the modeling unit 5 in the Y1 direction. Then, as illustrated in FIG. 2F, the three-dimensional object modeling apparatus applies droplets of the modeling liquid 10 from the head 52 of the modeling unit 5 to form a layer (perform modeling) of the modeling layer 30 in a predetermined portion of the next powder layer 31. The three-dimensional object modeling apparatus performs modeling by moving the head 52 in the X (main-scanning) direction and the Y (sub-scanning) direction. For example, the modeling liquid 10 contains a crosslinking agent, and when the modeling liquid 10 applied from the head 52 is mixed with the powder 20, a binding agent contained in the powder 20 is melted, and the melted binding agent is cross-linked, so that the powder 20 is bound and the modeling layer 30 is formed. The modeled object that is laminated upward on the modeling stage 24 is formed as the three-dimensional shaped modeled object such that binding agents in a lower surface of the modeling layer 30 on an upper layer side and a top surface of the modeling layer 30 on a lower layer side are cross-linked in the same manner due to penetration of the modeling liquid that is supplied to the modeling layer 30 on the upper layer side, and the modeling layer 30 on the upper layer side and the modeling layer 30 on the lower layer side are integrated.

Subsequently, as illustrated in FIG. 2G, the three-dimensional object modeling apparatus moves the modeling unit 5 in the Y2 direction to return the modeling unit 5 to the initial position, and the modeling operation for a single layer is completed. In other words, the three-dimensional object modeling apparatus returns to the state as illustrated in FIG. 2A. Thereafter, the three-dimensional object modeling apparatus repeats the process of supplying the powder 20, the process of forming the powder layer 31 by flattening, the process of applying the modeling liquid by the head 52, and the like the required number of times, so that the three-dimensional shaped modeled object (three-dimensional modeled object) as illustrated in FIG. 2H is completed.

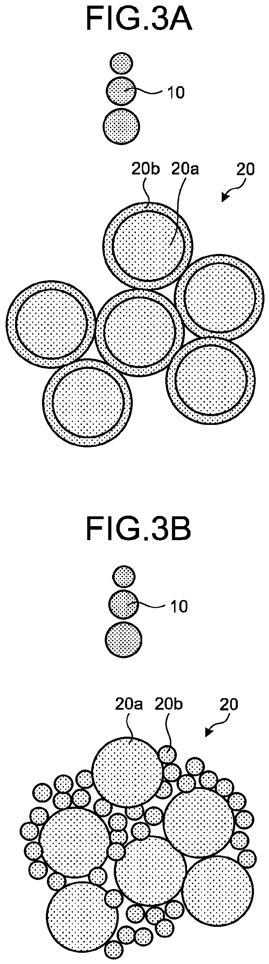

FIG. 3A to FIG. 3C are diagrams for explaining an example of the powder used in modeling performed by the three-dimensional object modeling apparatus. An example of the powder 20 used for modeling by the three-dimensional object modeling apparatus will be described below with reference to FIG. 3A to FIG. 3C.

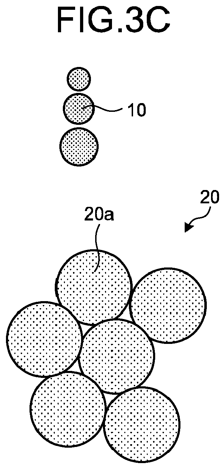

As illustrated in FIG. 3A, the powder 20 is formed such that a metallic or non-metallic core material (base material) 20a is covered (coated) by an organic resin binding agent (adhesive agent or binder) 20b. As the core material 20a, for example, stainless powder or glass powder is applicable. As will be described later, the core material 20a is subjected to solvent degreasing sintering and formed into a sintered body (final three-dimensional modeled object). As the organic resin, for example, polyvinyl alcohol, polyacrylic acid, or the like is applicable. Further, as illustrated in FIG. 3B, the binding agent 20b may be used by being mixed with the core material 20a, instead of being coated on the core material 20a. In the explanation above, it is assumed that the binding agent 20b is contained in the powder 20 and the modeled object is formed by applying the modeling liquid 10 that allows cross-linking with the binding agent 20b; however, as illustrated in FIG. 3C, the powder 20 may be configured with only the core material 20a and the binding agent may be contained in the modeling liquid 10 to form the modeled object.

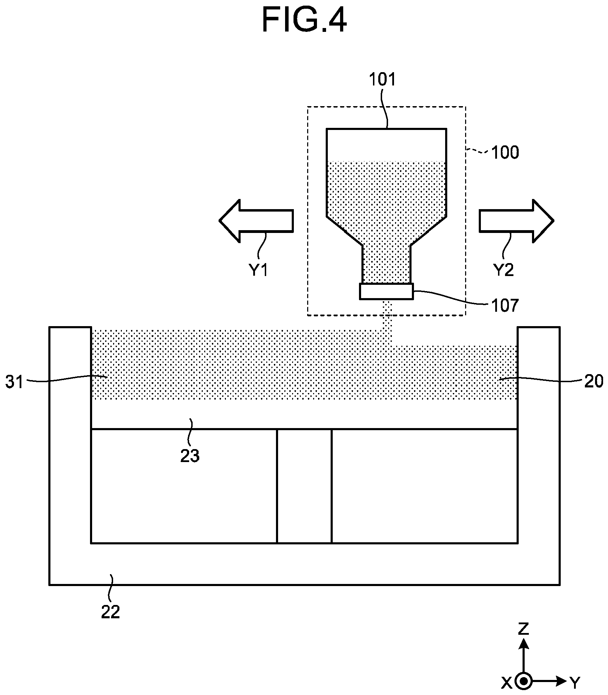

FIG. 4 is a diagram illustrating an example of the powder supply apparatus included in the three-dimensional object modeling apparatus according to the present embodiment. A mechanism that supplies the powder 20 to the modeling tank 22 of the three-dimensional object modeling apparatus according to the present embodiment is different from that of the three-dimensional object modeling apparatus illustrated in FIG. 1, but the other configurations are the same and explanation thereof will be omitted appropriately.

A powder supply apparatus 100 is one example of the powder supply apparatus that supplies the powder to the powder layer 31 in the modeling tank 22. Further, the powder supply apparatus 100 is arranged so as to be able to move in the Y1 direction and the Y2 direction in FIG. 4, and supplies the powder 20 to the modeling tank 22 by performing scanning above the modeling tank 22.

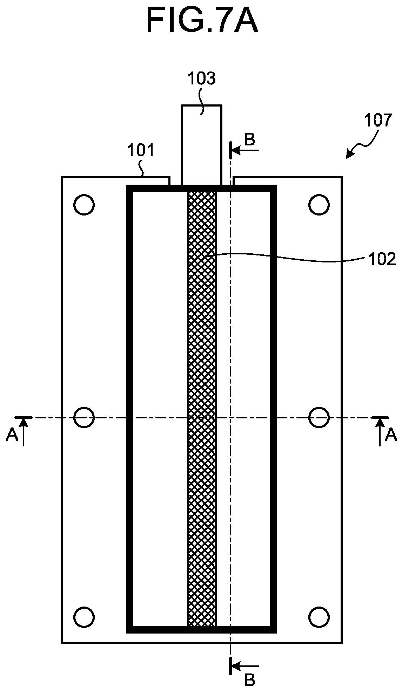

In the present embodiment, the powder supply apparatus 100 includes a hopper 101 as a powder holding part, and a vibration sieve part 107. The hopper 101 holds the powder 20. The vibration sieve part 107 is caused to vibrate by a vibration source 103 (see FIG. 7A). Accordingly, the powder 20 held by the hopper 101 is supplied to the modeling tank 22.

In the present embodiment, it is preferable that a length (width) of a powder supply port in the X direction, which is used for supply from the vibration sieve part 107 to the modeling tank 22, is the same as a length (width) of the modeling tank 22 in the X direction. In the present embodiment, the powder supply apparatus 100 moves in the Y1 direction and the Y2 direction to supply the powder 20 to the modeling tank 22.

Further, the powder supply apparatus 100 includes a driving part that causes the powder supply apparatus 100 to perform scanning above the modeling tank 22. In the present embodiment, the driving part moves the powder supply apparatus 100 in the Y1 direction and the Y2 direction above the modeling tank 22.

The powder supply apparatus 100 including the hopper 101 need not include the supply tank 21, so that it is possible to reduce a machine size of the three-dimensional object modeling apparatus. Further, it is possible to supply the powder 20 in an approximately uniform manner to the modeling tank 22 in advance, so that it is possible to uniformly apply pressure to a powder surface of the modeling tank 22 uniform at the time of flattening. Furthermore, in a two-tank system in which the supply tank 21 and the modeling tank 22 are arranged as illustrated in FIG. 1 etc., the amount of the powder 20 that is conveyed by the vibration blade 14 and the flattening roller 12 varies between an upstream side and a downstream side of the modeling tank 22, so that pressure applied to the powder surface of the modeling tank 22 varies, which leads to variation in packing density.

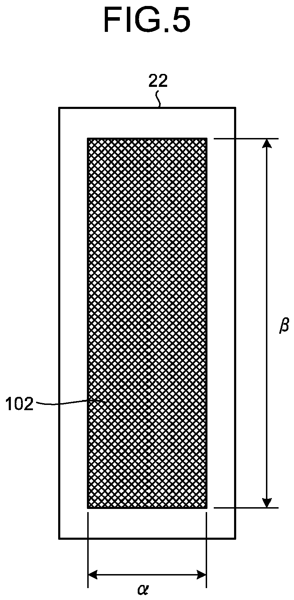

Here, FIG. 5 is a diagram illustrating a relationship between the modeling tank 22 and a powder supply port 102. As for a size ratio between α (the moving direction of the powder supply apparatus 100 (the Y1 direction and the Y2 direction illustrated in FIG. 4)) and β (the X direction illustrated in FIG. 4) of the modeling tank 22, a rectangular in which β is larger can achieve high productivity as compared to a square and a rectangular in which α is larger. This is because a moving distance of the powder supply apparatus 100 is dependent on α, so that the moving distance of the powder supply apparatus 100 decreases with a decrease in α.

Therefore, it is desirable the powder supply port 102 has a rectangular shape in which a size in the longitudinal direction is approximately β. With this configuration, it is possible to approximately uniformly supply the powder in the longitudinal direction β from the powder supply port 102 to the modeling tank 22 at once. Meanwhile, if the size of the powder supply port 102 is smaller than β, it is required to move the powder supply apparatus 100 in the β direction.

In contrast, when a powder supply apparatus in which a supply port has a circular shape is used, and if a diameter of the supply port is equal to or larger than β, it is possible to supply powder without movement in the β direction, but variation in supplied power in the β direction increases. Specifically, the amount of supply in a central portion of the supply port is increased and the amount of supply in edge portions of the supply port is reduced, which leads to variation in packing density in post processing.

Thus, it is preferable that the modeling tank 22 has a rectangular shape in which the moving direction of the powder supply apparatus 100 (the Y1 direction and the Y2 direction illustrated in FIG. 4) serves as a short side, and it is desirable that the powder supply port 102 of the powder supply apparatus 100 has approximately the same length as that of the modeling tank 22 in the longitudinal direction.

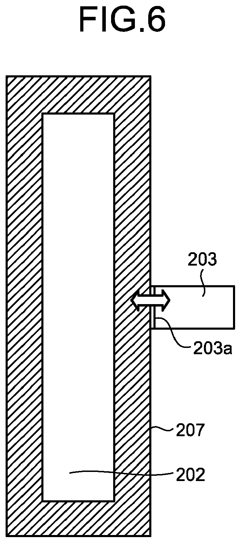

Here, FIG. 6 is a diagram illustrating a relationship between a conventional powder supply port and a vibration source. Conventionally, a vibration source 203 of a vibration sieve unit 207 is mounted on a vibration surface 203a that is located in an approximate center of a powder supply port 202 in the longitudinal direction so as to generate longitudinal waves in a short-side direction of the powder supply port 202. In this case, there is an influence on a strength change of the vibration sieve unit 207 mounted on the powder supply port 202, which leads to variation in vibration in the longitudinal direction of the powder supply port 202. If the vibration varies as described above, the amount of powder supplied from the powder supply port 202 varies.

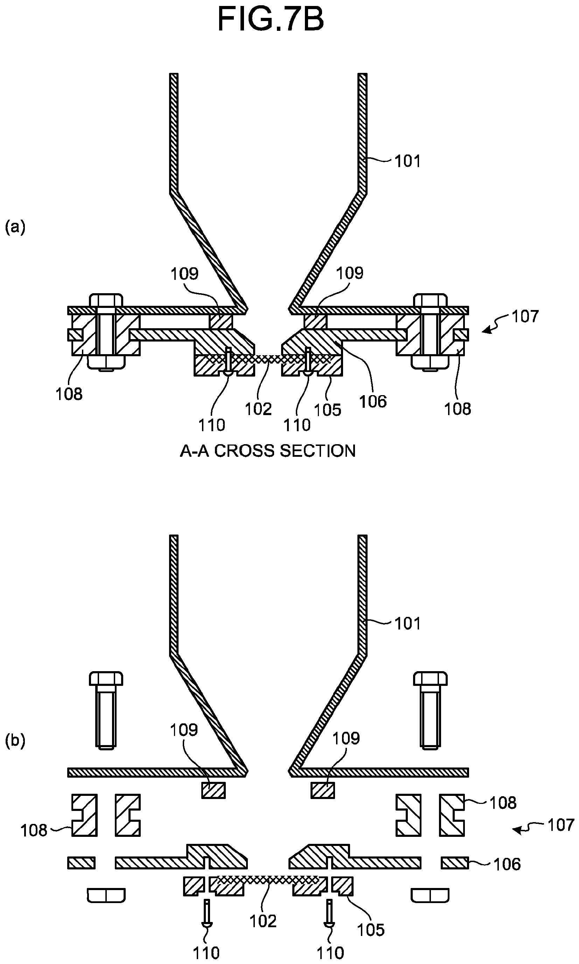

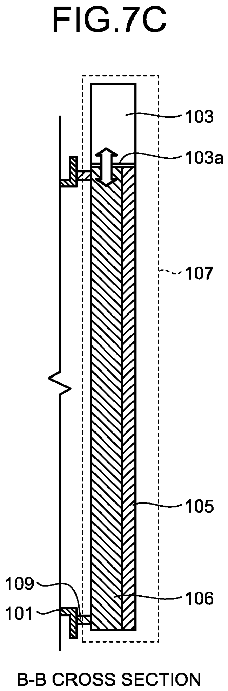

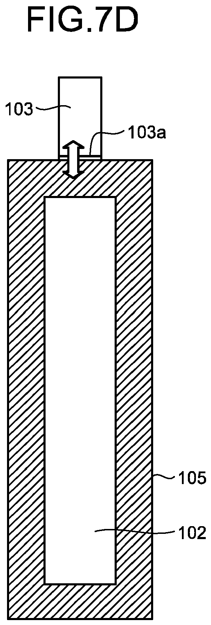

The vibration sieve part 107 and the vibration source 103 will be described below with reference to FIG. 7. FIG. 7A is a diagram illustrating an example of the vibration sieve part 107, FIG. 7B is a diagram illustrating an exemplary cross section of the vibration sieve part 107 taken along a line A-A, FIG. 7C is a diagram illustrating an exemplary cross section of the vibration sieve part 107 taken along a line B-B, and FIG. 7D is a diagram illustrating a relationship between a holding frame 105 and the vibration source 103. Meanwhile, FIG. 7B illustrates, at (b), an exploded view of the vibration sieve part 107 illustrated at (a) in FIG. 7B.

As illustrated in FIG. 7A to FIG. 7D, the vibration sieve part 107 includes the vibration source 103, the powder supply port 102, the holding frame 105 that holds the powder supply port 102, and a vibration source holding frame 106 that holds the vibration source 103. The vibration source 103 applies vibration to the powder supply port 102. As one example, a case will be described in which the powder supply port 102 uses a mesh, but embodiments are not limited to the mesh, and it is possible to appropriately select a medium, such as a net, a punching metal, an etching metal, or the like.

The powder supply port 102 illustrated in FIG. 7B is arranged between the holding frame 105 and the vibration source holding frame 106.

With this configuration, it is possible to apply vibration from the vibration source 103 via two frames, that is, the holding frame 105 and the vibration source holding frame 106, so that it is possible to efficiently transmit the vibration. Further, by sandwiching the powder supply port 102 between the holding frame 105 and the vibration source holding frame 106, it is possible to prevent the medium, such as the mesh, from peeling off from the powder supply port 102, for example.

In addition, when the vibration sieve part 107 is used for a predetermined period, it is required to exchange the medium, such as the mesh, due to abrasion or clogging of the powder supply port 102. Therefore, to reduce cost at the time of exchange and improve operability at the time of exchange, the holding frame 105 is configured to be removable from the vibration source holding frame 106. For example, as illustrated in FIG. 7A, the powder supply apparatus 100 uses a bolt-clamped Langevin type vibration source (BLT) as the vibration source 103. In FIG. 7A, the vibration source holding frame 106 and the vibration source 103 that is the BLT are fixed by screwing or welding. In FIG. 7B the vibration source holding frame 106 and the holding frame 105 are fixed by screws 110.

With this configuration, at the time of exchange, it is possible to perform exchange only by removing the holding frame 105 from the vibration source holding frame 106 and attaching the holding frame 105 holding a new medium, such as the mesh, to the vibration source holding frame 106.

Furthermore, as illustrated in FIG. 7A to FIG. 7D, the vibration source 103 is mounted on a short side of the powder supply port 102 of the powder supply apparatus 100. With this configuration, it is possible to maintain constant vibration in the longitudinal direction of the powder supply port 102, so that it is possible to maintain the constant supply amount of powder from the powder supply port 102.

Meanwhile, the powder supply apparatus 100 moves in the Y1 direction and the Y2 direction above the modeling tank 22 to supply the powder. If the vibration source 103 is mounted on a long side of the powder supply port 102, the vibration source 103 that may serve as an ignition source for dust explosion passes by above the modeling tank 22 in which the dust density is the highest. In contrast, as in the present embodiment, if the vibration source 103 is mounted on the short side of the powder supply port 102, the vibration source 103 does not pass by above the modeling tank 22 in which the dust density is the highest, so that it is possible to improve safety of the three-dimensional object modeling apparatus.

Moreover, as illustrated in FIG. 7D, if the holding frame 105 and the vibration source holding frame 106 are configured as separate bodies, both of the holding frame 105 and the vibration source holding frame 106 are configured to be in contact with a vibration surface 103a of the vibration source 103. With this configuration, it is possible to efficiently transmit the vibration from the vibration source 103 to both of the the holding frame 105 and the vibration source holding frame 106 and to the powder supply port 102. More specifically, transmission paths increase with an increase in the contacted frames. Furthermore, it is possible to transmit the vibration through the most efficient path that is formed of the vibration source 103, the holding frame 105, and the powder supply port 102 in this order.

In addition, vibration transmission should be further improved in the most efficient path in order of the vibration source 103, the holding frame 105, and the powder supply port 102. Therefore, the holding frame 105 is in contact with the vibration surface 103a of the vibration source 103 while being pressed on the vibration surface 103a. In this manner, by causing the holding frame 105 to be in contact with the vibration surface 103a of the vibration source 103 while press the holding frame 105 on the vibration surface 103a, it is possible to efficiently transmit the vibration.

Furthermore, as illustrated in FIG. 7B, the vibration sieve part 107 includes, in connecting portions between the vibration sieve part 107 and the hopper 101 for example, damping parts, such as damping materials or soft materials, in order to efficiently transmit the vibration of the vibration source 103 to the powder supply port 102. For example, in FIG. 7B, antivibration bushes 108 are arranged, as the damping parts, in the connection portions between the hopper 101 and the vibration source holding frame 106. Moreover, as illustrated in FIG. 7B, it may be possible to use soft materials for sealing materials 109 that prevent dust leakage in bonding portions between the vibration sieve part 107 and the hopper 101 and adopt the sealing materials 109 as the damping parts. With this configuration, it is possible to prevent unnecessary vibration leakage from the vibration sieve part 107 to the hopper 101, and it is possible to reduce output needed for the vibration source 103.

In addition, it is preferable that a frequency of the vibration generated from the vibration source 103 falls in an ultrasound region of 20 kHz or more. With this configuration, it is possible to transmit fine particles of 50 µm or less through the vibration sieve part 107. Furthermore, clogging of a mesh 104 is reduced. Moreover, a brush and a tapping ball are not needed, so that a risk of mixing of a foreign matter is reduced. In particular, in the three-dimensional object modeling apparatus, when fine particles of 20 µm to 10 µm are handled, it is effective to cause the mesh 104 to vibrate in the ultrasound region.

As described above, according to the present embodiment, it is possible to uniformly supply the powder to the modeling tank when the powder is supplied from the hopper to the modeling tank by the vibration sieve.

Furthermore, according to the present embodiment, if the vibration source is mounted on the short side of the powder supply port having a rectangular shape, the vibration source does not pass by above the modeling tank in which the dust density is the highest, so that it is possible to improve the safety of the three-dimensional object modeling apparatus.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

## Claims

1. A powder supply apparatus comprising:
at least a vibration sieve part configured to vibrate a powder supply port by a vibration source, wherein
the powder supply port has a rectangular shape, and
the vibration source is mounted on a short side of the powder supply port.

2. The powder supply apparatus according to claim 1, wherein
the vibration sieve part includes:
a vibration source holding frame holding the vibration source; and
a holding frame holding a medium arranged so as to face the powder supply port, and
the holding frame is removable from the vibration source holding frame.

3. The powder supply apparatus according to claim 2, wherein the holding frame and the vibration source holding frame are in contact with a vibration surface of the vibration source.

4. The powder supply apparatus according to claim 3, wherein the holding frame is in contact with the vibration surface of the vibration source while being pressed on the vibration surface.

5. The powder supply apparatus according to any one of claims 2 to 4, wherein the medium is arranged between the holding frame and the vibration source holding frame.

6. The powder supply apparatus according to any one of claims 2 to 5, wherein the medium is a mesh.

7. The powder supply apparatus according to any one of claims 1 to 6, further comprising:
a damping part configured to prevent vibration of the vibration sieve part from being transmitted to the powder holding unit configured to hold the powder.

8. The powder supply apparatus according to any one of claims 1 to 7, wherein a frequency of vibration of the vibration source is equal to or larger than 20 kHz.

9. A three-dimensional object modeling apparatus comprising:
the powder supply apparatus according to any one of claims 1 to 8; and
a modeling part configured to perform modeling with powder supplied from the powder supply apparatus.
